Europäisches Patentamt

European Patent Office

Office européen des brevets

(11) Publication number: **0 254 142 B1**

# EUROPEAN PATENT SPECIFICATION

(45) Date of publication of patent specification: **30.10.91** (51) Int. Cl.⁵: **G01D 21/00, G08C 15/06**

(21) Application number: **87109886.9**

(22) Date of filing: **08.07.87**

The file contains technical information submitted after the application was filed and not included in this specification

(54) **Single/multiple transducer for measuring one or more physical quantities of different kind or conventional electric variables.**

(30) Priority: **24.07.86 IT 2124586**

(43) Date of publication of application:
**27.01.88 Bulletin 88/04**

(45) Publication of the grant of the patent:
**30.10.91 Bulletin 91/44**

(84) Designated Contracting States:
**CH DE ES FR GB LI**

(56) References cited:
**FR-A- 2 514 177**
**GB-A- 1 404 319**
**GB-A- 2 024 570**

**ELEKTROTECHNIK UND MASCHINENBAU,
vol. 101, no. 4, April 1984, pages 163-167,
Wien, AT; D.GERSTNER et al.: "Die Schnitt-
stelle zwischen Sensoren und Mikroprozes-
sor"**

(73) Proprietor: **NICOTRA SISTEMI S.p.A.**
**Via Vincenzo Monti, 23**
**I-20016 Pero (Milan)(IT)**

(72) Inventor: **Monterosso, Gianpaolo**
**Via Alghero, 11**
**I-20128 Milan(IT)**
Inventor: **Marazzi, Riccardo**
**Via Delle Acacie, 7**
**I-20069 Vaprio D'Adda (Milan)(IT)**
Inventor: **Nicotra, Mario**
**Residenza Trefili-Milano 2**
**I-20090 Segrate (Milan)(IT)**
Inventor: **Manenti, Luciano**
**Via Kennedy, 22**
**I-25064 Gussago (Brescia)(IT)**

(74) Representative: **Münzhuber, Robert,
Dipl.-Phys.**
**Patentanwalt Rumfordstrasse 10**
**W-8000 München 5(DE)**

EP 0 254 142 B1

## Description

The present invention generally relates to transducers and more particularly to a transducer capable of detecting one or more physical quantities (for example pressure, temperature, moisture) or conventional electric variables (for example voltage, current, resistence and the like), as e.g. known from FR-A-2 514 177.

When using data acquisition systems a problem which normally is met is the physical connection between the transducer and the apparatus for the acquisition of the measurement provided by a sensor.

Often one is obliged to provide complex electric systems having multiple wire cables for connecting the sensors located along the network or alternatively to install decentralized or satellite data acquisition units which are connected by a single data line to the data acquisition unit proper.

This technique has revealed to be quite expensive because a plurality of devices are required to meet the above mentioned purpose, these devices requiring in turn relatively high servicing as well as installation costs.

The present invention aims at reducing in a substantial manner the costs bonded to the measurements of the physical quantities and electric variables as well as the operating costs of the transducers involved in such measurements.

The present invention is set out in claim 1.

With this system a single pair of wires for transmitting measurements relating to different physical quantities and/or electric variables can be used, so that there will be no longer required transducers in the number equal to the number of the physical quantities and/or electric variables and timers in the number equal to the number of transducers, thereby providing important savings both as to the component costs and as to the operation thereof.

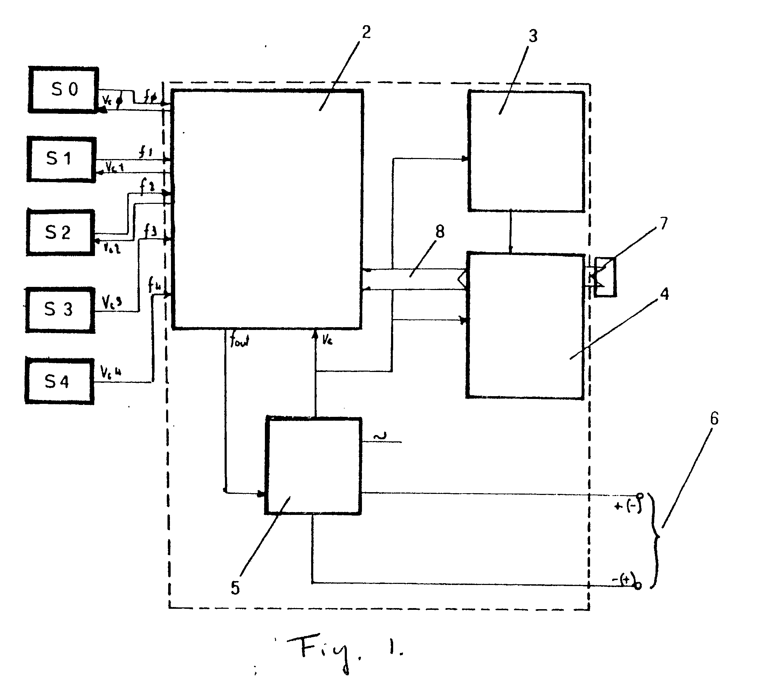

The present invention will be now described in more detail in connection with the accompanying drawing wherein the single Figure shows by way of example a block diagram of a single/multiple transducer in accordance with the present invention.

Referring now to the drawing, the transducer comprises a plurality of sensors S0,S1,S2,S3 and S4 connected to a multiplexer 2 which is energized by a stabilized power supply 5, in turn supplied through the line 6, a clock generator 3 and an address generator 4. The address generator 4 is connected to the multiplexer 2 and to a device 7 for programming the address code by the operator or installer.

The sensor is designed so as to generate at its output a signal of a frequency which is proportional to the physical quantities or electric variable in accordance with a well known technique, as for example:

- the integrated circuit of NATIONAL SEMICONDUCTOR LM 555 and its equivalents applied as voltage-to-frequency converter (VCO) which permits the conversion of the voltage to frequency;
- the VCO circuit disclosed in "Application Note 81" AN81-3 issued in June 1973 described in "LINEAR APPLICATION HANDBOOK" of the National Semiconductor.

The voltage-to-frequency converter circuit permits to have as an output a frequency signal which is proportional to the voltage applied to the input and which is generated by the flow of electric current through resistors connected to each other in a "divider" or "bridge" configuration.

Should a suitable resistor change its resistence, a voltage change thereacross will occur.

This voltage, when applied to the VCO circuit, allows a signal to be measured, the frequency of which is proportional to the electric resistance change.

The electronic multiplexing and counting circuit is provided by a normal counter chain.

This circuit has been devised in order to meet different requirements, namely:

- to permit the output of a frequency signal in a predeterminated time programmed by the operator or installer by means of a set of connections made by "bridges" and/or "switches" or through other techniques. This operation consists in assigning to each (multiple) transducer a coded address;
- to permit the output of the signals of all sensors connected to the input from the (multiple) transducer one at the time.

This function is obtained by applying a multiplexer driven by the counting circuit which generates one at the time the addressing signals in the code of the associated sensor connected to the multiple transducer.

A code is therefore assigned to each sensor when it is electrically connected to the multiple transducer; such a code is generated by the counting and multiplexing circuit to enable the sensor to be power supplied and the signal proportional to the physical quantity or electric variable to be output.

The sensors are therefore enabled by a code from a counting circuit.

An internal timer permits the duration of the frequency signal to be determined.

The operation of the single/multiple transducer according to this invention is as follows.

When on the line 6 the operating voltage is applied, the power supply 5 provides the necessary operating voltage to the clock generator 3, the address generator 4 and the multiplexer 2.

Then the clock generator 3 starts to deliver to the address generator 4 a pulse chain having a stable and precise frequency. By employing this frequency the address generator 4 makes a count which generates a different code for each pulse.

When the generated code is the same as the code programmed by the operator or installer through the programming device 7, the address generator 4 generates on the output 8 the coded address corresponding to the first sensor S0 which can be a sensor of a physical quantity or the condition of the contacts associated to pressure switches, humidistats, flow regulators, relays and generally permits ON-OFF signals to be detected; as well as electric variables such as voltage, resistance, current and so on.

This address is decoded by the multiplexer 2 which diverts to the selected sensor the operating voltage from the power supply 5 and also diverts the frequency signal generated by the sensor through the power supply 5 and to the signal output line 6.

In this case the power supply 5 simultaneusly acts as a power circuit for the sensor signal.

After a short predetermined time is elapsed, a timer located in the address generator 4 interrupts the signal output and then the address generator 4 generates the coded address corresponding to the following sensor.

This procedure will be repeated as many times as the sensors connected to the multipler 2 are.

The purpose of sensors is to convert the detected pressure to a quantity proportional to the pressure, in this case the frequency.

As can be seen, the single/multiple transducer comprises:

- a multiplexer which actuates and selects the sensor corresponding to the coded address assigned to a suitable input thereof;
- a clock generator for the counting chain;
- a counting and timing circuit which generates the address to be supplied to the multiplexer for selecting one of the externally connected sensors;
- a power supply for delivering the operating voltage to the remaining components of the circuit; and
- the line on which the power is supplied and the signal proportional to the physical quantity or electric variable is generated by the sensors.

By means of this system each of the sensors can be connected through the transudecer to a single pair of wires without interfering with each other during the transmission of the measurement to the acquisition unit, thereby permitting an important installation saving and a quicker operation of the system to be obtained. These devices operate with very low currents and are remotely supplied by the same pair of wires on which they send the response signal and therefore do not need to be locally power supplied.

The acquisition unit directly provides the necessary voltage for the regular operation of the transducer.

By means of this single/multiple transducer one or more transducers measuring different variables can be connected one a single line. For example, on a single pair of wires temperature sensors, pressure sensors, current sensors, moisture sensors and all the sensors providing on their outputs a voltage, a current or a resistance can be connected.

The advantages provided by the single/multiple transducer according to this invention with respect to the single pressure transducers are the following:

1) Cost reductions for each measurement because the costs of the common components are divided by the number of used measurement locations.

2) Substantial cost savings in the single/multiple transducer installation because it is sufficient to make a single electric connection to the location in which it is desired to detect the physical quantity.

3) Operating cost reduction of the single/multiple transducers because a single loop is used.

**Claims**

1. A single/multiple transducer for measuring one or more conventional physical quantities and electric variables, comprising:

- at least one sensor (S), each of said at least one sensor (S) detecting either a physical quantity or an electric variable and outputting a frequency signal having a frequency which is proportional to a level of either said detected physical quantity or said detected electric variable;

- a multiplexer unit (2) for selecting and enabling said at least one sensor (S1) according to a coded address assigned to each of said at least one sensor (S) and for transmitting each said frequency signal received from each of said at least one sensor (S);

- an address generator (4) for forming and delivering to said multiplexer unit (2) each said coded address assigned to each of said at least one sensor (S);

- a clock generator (3) connected to said multiplexer unit (2) through said address generator (4) for controlling a rate of operation of said multiplexer unit (2) and said address generator (4);

- a power supply unit (5) for delivering an operating voltage to said multiplexer unit (2), said clock generator (3) and said address generator (4); and

- a single loop (6) for supplying electric power to said power supply unit (5) and for delivering each said frequency signal transmitted from said multiplexer unit (2).

2. A single/multiple transducer as claimed in claim 1, characterized in that said address generator (4) comprises a programming device (7) for generating each said coded address.

3. A single/multiple transducer as claimed in claim 1, characterized in that said address generator (4) comprises a binary counter.

4. A single/multiple transducer as claimed in claim 1, characterized in that each of said at least sensor (S) comprises a voltage-to-frequency converter for outputting a frequency signal which is proportional to a voltage applied to an input of said voltage-to-frequency converter.

5. A single/multiple transducer as claimed in claim 2, characterized in that said address generator (4) comprises a binary counter and said programming device comprises bridges connecting outputs of said binary counter to said multiplexer unit (2).

6. A single/multiple transducer as claimed in claim 1, characterized in that said multiplexer unit (2) is comprised of a plurality of analogue multiplexers.

**Revendications**

1. Transducteur simple/multiple de mesure d'une ou de plusieurs quantités physiques ou variables électriques comportant:
   - au moins un capteur (S), le ou chaque capteur (S) captant une quantité physique ou une variable électrique et délivrant un signal de fréquence dont la fréquence est proportionnelle au niveau de ladite quantité physique captée ou de ladite variable électrique captée;
   - une unité de multiplexage (2) pour sélectionner et activer le ou chaque capteur (S1) selon une addresse codifiée destinée au ou à chaque capteur (S) et pour transmettre ledit signal de fréquence

reçu du ou de chaque capteur (S);
   - un générateur d'addresses (4) pour former et délivrer à ladite unité de multiplexage (2) chaque addresse codifiée assignée au ou à chaque capteur (S);
   - un générateur de rythme (3) relié à ladite unité de multiplexage (2) par l'intermédiaire dudit générateur d'addresses (4) pour contrôler la vitesse de functionnement de ladite unité de multiplexage (2) et dudit générateur d'addresses (4);
   - un alimentateur (5) pour alimenter en tension ladite unité de multiplexage (2), ledit générateur de rythme (3) et ledit générateur d'addresses (4); et
   - une ligne unique (6) pour alimenter en courant électrique ledit alimentateur (5) et pour délivrer chaque signal de fréquence transmis par ladite unité de multiplexage (2).

2. Transducteur simple/multiple selon la revendication 1, caractérisé en ce que ledit générateur d'addresses (4) comporte un dispositif programmeur (7) pour la production de chacune desdites addresses codifiées.

3. Transducteur simple/multiple selon la revendication 1, caractérisé en ce que ledit générateur d'addresses (4) comporte un compteur binaire.

4. Transducteur simple/multiple selon la revendication 1, caractérisé en ce que le ou chacun capteur (S) comporte un convertisseur de tension-fréquence pour délivrer un signal de fréquence qui est proportionnel à la tension appliquée à une entrée dudit convertisseur de tension-fréquence.

5. Transducteur simple/multiple selon la revendication 2, caractérisé en ce que ledit générateur d'addresses (4) comporte un compteur binaire et ledit dispositif programmeur comporte des barrettes qui relient les sorties dudit compteur binaire à ladite unité de multiplexage (2).

6. Transducteur simple/multiple selon la revendication 1, caractérisé en ce que ladite unité de multiplexage (2) comporte une pluralité de multiplexers analogiques.

**Patentansprüche**

1. Ein- oder Mehrfachtransduktor zum Messen einer oder mehrerer physikalischen und elektrischen Größen bestehend aus:
   - wengistens einem Fühler (S), wobei der oder jeder Fühler (S) eine physikalische sowie eine elektrische Größe fühlt und ein elektrisches Frequenzsignal abgibt, das einem Niveau entweder der gefühlten physikalischen oder elektrischen Größe proportional ist;

- eine Multiplexereinheit (2) zum Wirksammachen und Auswählen des oder jeden Fühlers (S1) entsprechend einer codierten Adresse, die für den oder jeden Fühler (S) bestimmt ist, und zum Übermitteln des von dem Fühler (S) empfangenen Frequenzsignals;

- einen Adressengenerator (4), um jede codierte Adresse, die für den oder jeden Fühler (S) bestimmt ist, zu bilden und an die Multiplexereinheit (2) abzugeben;

- einen Zeitgebergenerator (3), der mit der Multiplexereinheit (2) über den Adressengenerator (4) verbunden ist, zum Steuern der Betriebsgeschwindigkeit der Multiplexereinheit (2) und des Adressengenerators (4);

- einem Stromspeiser (5), um die Multiplexereinheit (2), den Zeitgebergenerator (3) und den Adressengenerator (4) mit einer Betriebsspannung zu versorgen; und

- einer einzigen Leitung (6), um den Stromspeiser (5) zu versorgen und um jedes von der Multiplexereinheit (2) übermittelte Frequenzsignal abzugeben.

2. Ein- oder Mehrfachtransduktor nach Anspruch 1, dadurch gekennzeichnet, daß der Adressengenerator (4) eine Programmiervorrichtung (7) zum Erzeugen der codierten Adressen umfaßt.

3. Ein- oder Mehrfachtransduktor nach Anspruch 1, dadurch gekennzeichnet, daß der Adressengenerator (4) einen binären Zähler aufweist.

4. Ein- oder Mehrfachtransduktor nach Anspruch 1, dadurch gekennzeichnet, daß jeder Fühler (S) einen Spannung-Frequenzwandler zur Abgabe von einem Frequenzsignal aufweist, das der an einem Eingang des Spannung-Frequenzwandlers angelegten Spannung proportional ist.

5. Ein- oder Mehrfachtransduktor nach Anspruch 2, dadurch gekennzeichnet, daß der Adressengenerator (4) einen binären Zähler aufweist und die Programmiervorrichtung Überbrückungsklemmen umfaßt, die die Ausgänge von dem binären Zähler zu der Multiplexereinheit (2) verbinden.

6. Ein- oder Mehrfachtransduktor nach Anspruch 1, dadurch gekennzeichnet, daß die Multiplexereinheit (2) eine Vielzahl von Analogmultiplexer umfaßt.

Fig. 1.